# EUROPÄISCHE PATENTSCHRIFT

(11) **EP 2 592 026 B1**
(45) Veröffentlichungstag und Bekanntmachung des Hinweises auf die Patenterteilung: **25.06.2014**
(21) Anmeldenummer: 12450045.5
(22) Anmeldetag: 07.11.2012
(51) Int. Cl.: B65G 53/22, B65G 53/28, F16K 11/085, F16K 11/074

(54) **Saugförderanlage**
Suction conveyor device
Installation d'acheminement par aspiration

(30) Priorität: 08.11.2011 AT 16502011
(43) Veröffentlichungstag der Anmeldung: 15.05.2013
(73) Patentinhaber: KWB - Kraft und Wärme aus Biomasse GmbH, 8321 St. Margarethen/Raab (AT)
(72) Erfinder: Flitsch, Manfred, 8082 Kirchback (DE); Salmhofer, Manfred, 8211 Grobpesendorf (DE); Rabler, Anton, 5020 Salzburg (AT); Bauer, Thomas, 5020 Salzburg (AT)
(74) Vertreter: Gibler & Poth Patentanwälte OG

(56) Entgegenhaltungen:
- EP-A1- 0 305 152
- WO-A1-87/05281
- WO-A1-02/079016
- WO-A1-2004/011834
- WO-A1-2005/056441
- CH-A- 328 844
- DE-A1- 3 409 757
- DE-B- 1 134 256
- US-A- 3 809 438
- US-A- 4 203 469
- US-A- 5 505 567
- US-B1- 7 311 474

## Beschreibung

Die Erfindung betrifft eine Saugförderanlage gemäß dem Oberbegriff des Patentanspruches 1.

Solche Saugförderanlagen werden zur Förderung von festem Heizmaterial zu einem Heizkessel verwendet, wobei als Heizmaterial insbesondere solche aus nachwachsenden Rohstoffen, wie beispielsweise Holzpellets, von steigender Bedeutung sind.

Es sind Saugförderanlagen für Pellets bekannt, welche mittels einer Saugleitung Pellets aus einem Heizmateriallager an einer Entnahmestelle ansaugen, die angesaugten Pellets von der Luft abtrennen, und die angesaugte Luft wieder mittels einer Rückluftleitung in das Heizmateriallager an der Entnahmestelle rückführen, um die Pellets an der Entnahmestelle aufzulockern.

Aus der EP 0 305 152 A1 ist ein pneumatisches Fördersystem bekannt, wobei an einer Stelle mittels einer Entnahmevorrichtung Schüttgut aus einem Reaktor gefördert, abgeschieden und das Förderfluid mittels einer Rückleitung in die Entnahmevorrichtung rückgeführt wird.

Aus der WO 02/079016 A1 ist ein Schüttgutbehälter mit mehreren voneinander beabstandeten Entnahmevorrichtungen bekannt, wobei jede Entnahmevorrichtung über eine Leitung mit einer Quelle für Druckluft und mit einer Vakuumsauganlage verbunden ist. Dieses Dokument offenbart eine Anlage gemäß dem Oberbegriff des Anspruchs 1.

Aus der WO 2005/056441 A1 ist ein Speicher bekannt, welcher wahlweise mit Druck oder Vakuum beaufschlagt werden kann, um aus einer Öffnung wahlweise be- oder entladen zu werden.

Aus der US 7 311 474 B1 ist ein Speicher bekannt, welcher mittels einer Entnahmevorrichtung an einer Stelle geleert werden kann. Die Entnahmevorrichtung weist hierbei eine Saugöffnung für das zu fördernde Gut auf, wobei zur Förderung im Bereich der Saugöffnung komprimiertes Gas eingeleitet wird.

Aus der US 3 809 438 A, der WO 87/05281 A1 und der US 5 505 567 A sind verschiedene pneumatischen Fördersysteme bekannt, wobei an jeweils einer Entnahmevorrichtung in einem Stoffspeicher eine Saugleitung und eine Rückluftleitung münden.

Aus der WO 2004/011834 A1, der DE 11 34 256 B, der US 4 203 469 A, der DE 34 09 757 A1 und der CH 328 844 A sind verschiedene Mehrwegventile und Rohrweichen bekannt.

Nachteilig daran ist, dass eine Vielzahl an Material, wie beispielsweise Schläuche, notwendig ist, wodurch die Saugförderanlage aufwendig in Konstruktion und Wartung ist, und weiters fehleranfälliger durch die vielen Komponenten ist. Dies verursacht einen hohen Wartungsaufwand, bzw. hohe Ausfallraten. Weiters hat eine derartige Saugförderanlage einen großen Platzbedarf, wobei der Platzbedarf bei einem Einsatz in Eigenheimen ein wesentlicher limitierender Faktor ist, wodurch eine solche Saugförderanlage für viele Gebäude nicht geeignet ist.

Aufgabe der Erfindung ist es daher eine Saugförderanlage der eingangs genannten Art anzugeben, mit welcher die genannten Nachteile vermieden werden können, welche platzsparend und einfach in Konstruktion und Wartung ist, welche funktionssicher ist, und einen geringen Wartungsaufwand aufweist.

Erfindungsgemäß wird dies durch die Merkmale des Patentanspruches 1 erreicht.

Dadurch können die Vorteile einer Rückluftleitung für mehrere Entnahmestellen mit einer geringen Anzahl an Leitungen realisiert werden. Dadurch kann die Saugförderanlage platzsparend ausgebildet werden, wodurch der umweltfreundliche Einsatz von Pelletheizungen in einer größeren Zahl von Gebäuden möglich ist. Ein weiterer Vorteil besteht darin, dass die Saugförderanlage weniger materialaufwendig sowie einfacher im Aufbau ist, da weniger Leitungen benötigt werden. Außerdem ist die Saugförderanlage wenig fehleranfällig und einfach in der Wartung, da die Anzahl der verwendeten Komponenten reduziert werden kann. Weiters ist lediglich ein kleinerer Mauerdurchbruch in der Trennwand zwischen Vorratsraum und Heizraum notwendig, wodurch der Einbau weiter vereinfacht wird, und nur geringe negative Einflüsse auf die Statik des betreffenden Gebäudes ausgeübt werden.

Die Unteransprüche betreffen weitere vorteilhafte Ausgestaltungen der Erfindung.

Ausdrücklich wird hiermit auf den Wortlaut der Patentansprüche Bezug genommen, wodurch die Ansprüche an dieser Stelle durch Bezugnahme in die Beschreibung eingefügt sind und als wörtlich wiedergegeben gelten.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
Fig. 1 einen Teil einer bevorzugten Ausführungsform in axonometrischer Darstellung;
Fig. 2 die bevorzugten Ausführungsform in Vorderansicht;
Fig. 3 die bevorzugten Ausführungsform in Draufsicht;
Fig. 4 die bevorzugten Ausführungsform in Rückansicht;
Fig. 5 einen Teil der bevorzugten Ausführungsform;
Fig. 6 den Teil der bevorzugten Ausführungsform aus Fig. 5 aus einer anderen Perspektive;
Fig.7 den Teil der bevorzugten Ausführungsform aus Fig. 5 als Schnitt;
Fig. 8 ein Detail der bevorzugten Ausführungsform;
Fig. 9 das Detail der bevorzugten Ausführungsform aus Fig. 8 aus einer anderen Perspektive;
Fig.10 das Detail der bevorzugten Ausführungsform aus Fig. 8 als Schnitt;
Fig.11 eine weitere bevorzugte Ausführungsform als Prinzipdarstellung.

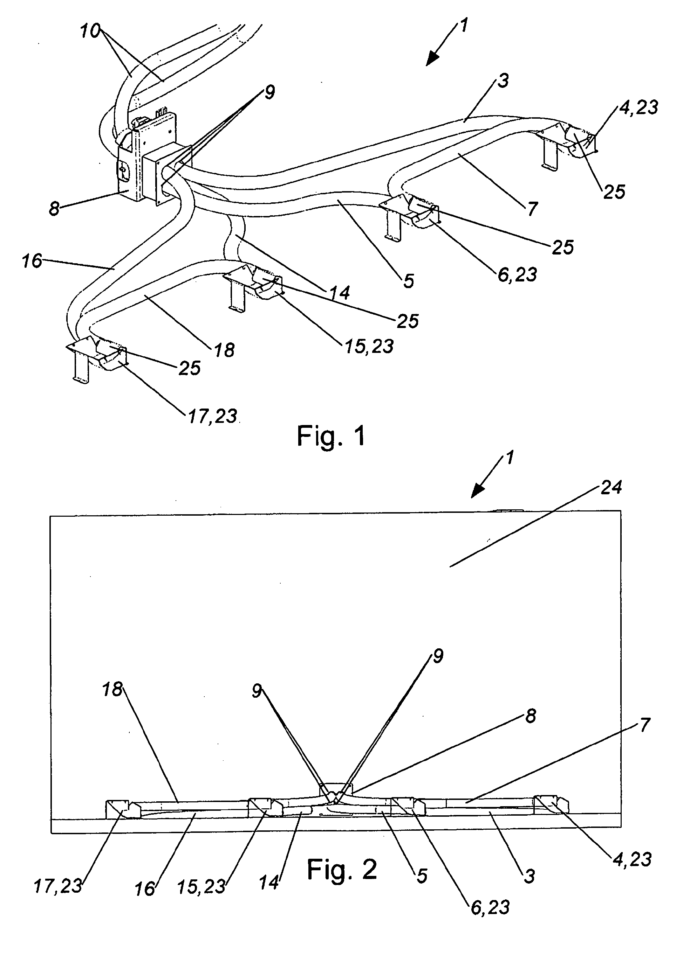

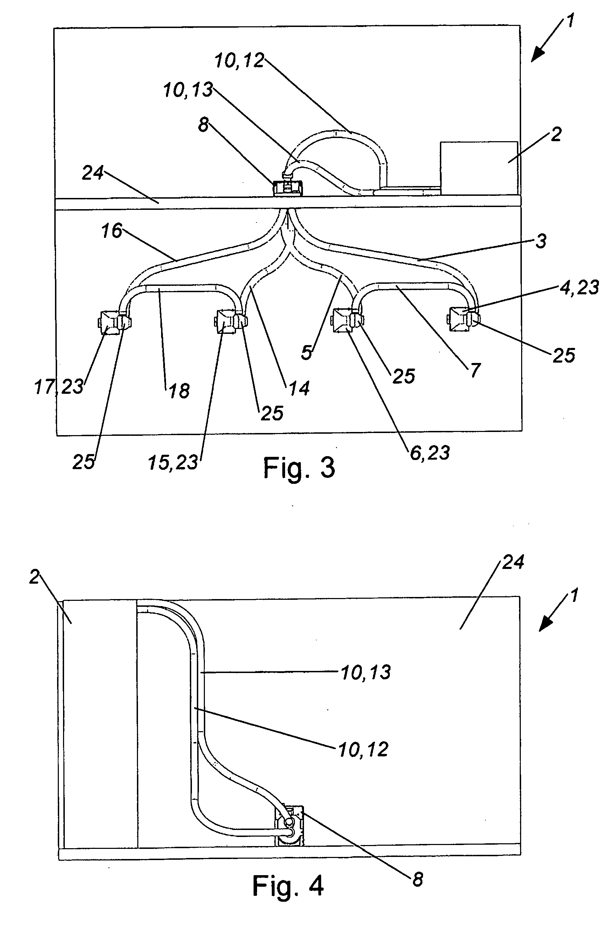

Die Fig. 1 bis 4 zeigen eine bevorzugte Ausführungsform einer Saugförderanlage 1 für eine Heizanlage, zur Entnahme festem, rieselfähigem Heizmaterials aus einem Stoffspeicher. Dieses feste und rieselfähige Heizmaterial kann beispielsweise Kohle und/oder Pellets umfassen. Solche Pellets werden bevorzugt aus nachwachsenden Rohstoffen wie Holz, beispielsweise in der Form von verpressten Sägespänen, oder Stroh hergestellt. Dieses feste und rieselfähige Heizmaterial wird in Folge kurz Heizmaterial genannt. Die Saugförderanlage ist aber nicht auf das Fördern von Heizmaterial beschränkt, sondern kann beispielsweise auch andere feste und rieselfähige Materialien, wie etwa Kunststoffgranulat in einem Produktionsbetrieb oder Getreide, fördern. In der weiteren Beschreibung wird jeweils der Begriff Heizmaterial verwendet, wobei bevorzugt auch besagte anderen festen und rieselfähigen Materialien mit umfasst sein können.

Die Heizanlage dient zur Verfeuerung des Heizmaterials. Der Stoffspeicher, welcher in den Figuren nicht dargestellt ist, ist bevorzugt ein Lagerbehälter, in welchem ein Vorrat an Heizmaterial für einen längeren Zeitraum gelagert werden kann. Ein Stoffspeicher kann hierbei als jede Form von Lagerbehältnissen, wie beispielsweise Lagerraum, Gewebetank, Erdtank, Metalltank oder Tank aus einer Holzkonstruktion, ausgebildet sein. Bevorzugt kann die Heizanlage neben einem Brennofen noch einen Pufferspeicher umfassen, welcher vom Stoffspeicher mittels der Saugförderanlage mit dem Heizmaterial beschickt wird, und aus diesen Pufferspeicher der Brennofen dosiert mit dem Heizmaterial beschickt werden kann. Aus Sicherheitsgründen ist bevorzugt der Stoffspeicher in einem Vorratsraum angeordnet, welcher von einem Heizraum, in welchem die Heizanlage angeordnet ist, durch eine Trennwand 24, welche in Fig. 2 bis 4 dargestellt ist, getrennt ist.

Die Saugförderanlage 1 weist eine Saugvorrichtung 2 auf. Die Saugvorrichtung 2 kann bevorzugt Mittel zur Förderung und/oder Bewegung von einem Fluid aufweisen. Als Fluid kann besonders bevorzugt Luft verwendet werden. Aus Sicherheitsgründen können als Fluid aber auch nicht brennbare oder nicht brandbeschleunigende Gase oder Flüssigkeiten verwendet werden. Bevorzugt umfasst die Saugvorrichtung 2 Pumpen und/oder Gebläse, um das Heizmaterial mittels dem Fluid aus dem Stoffspeicher zu fördern. Weiters weist die Saugvorrichtung 2 bevorzugt Mittel auf, zum Ausscheiden des Heizmaterials aus dem Fluid, beispielsweise ein Zyklon, bei welchen die Abscheidung mittels Verwirbelungen erfolgt, oder mechanisch mittels beispielsweise einem Gitter.

Besonders bevorzugt kann vorgesehen sein, dass die Saugvorrichtung 2 zur Rückspeisung des Fluids, aus welchem das Heizmaterial abgetrennt wurde, in den Stoffspeicher ausgebildet ist. Besonders bevorzugt weist die Saugvorrichtung 2 in diesem Zusammenhang eine Saugseite 12 und eine Druckseite 13 auf, wobei an der Saugseite 12 der Saugvorrichtung 2 das Heizmaterial mit Fluid aus dem Stoffspeicher angesaugt wird, und an der Druckseite 13 der Saugvorrichtung 2 das Fluid in den Stoffspeicher, insbesondere unter Druck, rückgeführt wird. Bevorzugt ist daher die Saugförderanlage 1 für das Fluid ein Kreislaufsystem. Dadurch kann auf eine Reinigung des Fluids von Resten des Heizmaterials verzichtet werden, und der damit verbunden Wartung von Filtern.

Die Saugvorrichtung 2 ist mittels einer ersten Leitung 3 mit einer ersten Entnahmevorrichtung 4 verbunden ist, insbesondere leitend verbunden ist. Die erste Leitung 3 kann beispielsweise als Schlauch oder als Rohr ausgebildet sein. Weiters kann die erste Leitung 3 sowohl als Förderleitung als auch als Fluidzugangsleitung ausgebildet sein. Eine Förderleitung dient zur Förderung von Heizmaterial aus dem Stoffspeicher in einem Fördervorgang mittels Unterdruck und kann in diesem Sinne auch als Saugleitung bezeichnet werden. Eine Fluidzugangsleitung dient zur Rückführung des Fluids in den Stoffspeicher während des Fördervorganges, bevorzugt unter einem Überdruck, und kann in diesem Sinne auch als Rückluftleitung bezeichnet werden, sofern das Fluid Luft ist.

Die erste Entnahmevorrichtung 4 kann im und/oder am Stoffspeicher angeordnet sein, und ist bevorzugt derart ausgebildet, dass loses Heizmaterial durch einen Unterdruck aus dem Stoffspeicher in die erste Leitung 3 gesaugt werden kann.

Vorgesehen ist, dass die Saugvorrichtung 2 mittels einer zweiten Leitung 5 mit einer zweiten Entnahmevorrichtung 6 verbunden ist, insbesondere leitend verbunden ist. Auch die zweite Leitung 5 kann beispielsweise als Schlauch oder als Rohr ausgebildet sein. Weiters kann auch die zweite Leitung 5 sowohl als Förderleitung als auch als Fluidzugangsleitung ausgebildet sein. Die zweite Entnahmevorrichtung 6 kann im und/oder am selben Stoffspeicher oder einem anderen Stoffspeicher angeordnet sein, und ist bevorzugt derart ausgebildet, dass loses Heizmaterial durch einen Unterdruck aus einem Stoffspeicher in die zweite Leitung 5 gesaugt werden kann. Besonders bevorzugt ist in diesem Zusammenhang vorgesehen, dass die zweite Entnahmevorrichtung 6 mit der Druckseite 13 der Saugvorrichtung 2 verbunden ist, wenn die erste Entnahmevorrichtung 4 mit der Saugseite 12 der Saugvorrichtung 2 verbunden ist, und dass die zweite Entnahmevorrichtung 6 mit der Saugseite 12 der Saugvorrichtung 2 verbunden ist, wenn die erste Entnahmevorrichtung 4 mit der Druckseite 13 der Saugvorrichtung 2 verbunden ist.

Insbesondere kann vorgesehen sein, dass die zweite Entnahmevorrichtung 6 von der ersten Entnahmevorrichtung 4 beabstandet an dem selben Stoffspeicher angeordnet ist. Dadurch kann das Fluid während des Fördervorganges durch den Stoffspeicher strömen, wodurch das Heizmaterial während des Fördervorganges zusätzlich aufgelockert wird.

Gemäß der bevorzugten Ausführungsform sind bevorzugt die erste Entnahmevorrichtung 4 und die zweite Entnahmevorrichtung 6 in einer horizontalen Ebene angeordnet. Dadurch kann einem länglichen Stoffspeicher an mehreren Stellen Heizmaterial entnommen werden, wodurch das Volumen eines länglichen Stoffspeichers gut genutzt werden kann. Solche längliche Stoffspeicher sind vorteilhaft, da diese leicht in einen bestehenden Keller, welcher oft nur eine geringe Raumhöhe bietet, eingebaut werden können.

Besonders bevorzugt kann vorgesehen sein, dass die erste Leitung 3 als Förderleitung und die zweite Leitung 5 als Fluidzugangsleitung ausgebildet ist, oder dass die zweite Leitung 5 als Förderleitung und die erste Leitung 3 als Fluidzugangsleitung ausgebildet ist. Dadurch sind lediglich eine Leitung 3,5 pro Entnahmevorrichtung 4,6 notwendig, wodurch auf eine Separation von Förderleitung und Fluidzugangsleitung verzichtet werden kann, wodurch die Anzahl der Leitungen reduziert werden kann. Weiters werden die erste Leitung 3 und die zweite Leitung 5 sowohl zum Ansaugen als auch zum Rückführen des Fluids verwendet, wodurch einer Verstopfung in einer der beiden Leitungen 3,5 durch konglomerierendes Heizmaterial entgegengewirkt wird.

In diesem Zusammenhang kann bevorzugt vorgesehen sein, dass die Saugvorrichtung 2 mittels genau einer ersten Leitung 3 mit der ersten Entnahmevorrichtung 4 verbunden ist, und dass die Saugvorrichtung 2 mittels genau einer zweiten Leitung 5 mit der zweiten Entnahmevorrichtung 6 verbunden ist, also nicht pro Entnahmevorrichtung 4,6 zwei Leitungen vorgesehen sind.

Gemäß der Erfindung ist die erste Entnahmevorrichtung 4 mittels einer dritten Leitung 7 mit der zweiten Entnahmevorrichtung 6 verbunden. Die dritte Leitung 7 kann beispielsweise als Schlauch, Rohr oder als aufgesetzte Schiene innerhalb des Stoffspeichers ausgebildet sein, und ist ein Teil der Fluidzugangsleitung. Dadurch ergibt sich der Vorteil, dass das rückströmende Fluid unter anderem an jener Entnahmevorrichtung 4,6 austritt und das Heizmaterial lockert, an welcher gleichzeitig der Fördervorgang stattfindet.

Wenn beispielsweise an der erste Entnahmevorrichtung 4 über die erste Leitung 3 Heizmaterial gefördert wird, erfolgt der Rückstrom des Fluids über die zweite Leitung 5 zu der zweiten Entnahmevorrichtung 6, welche daher auch vom rückströmenden Fluid durchspült wird, und von der zweiten Entnahmevorrichtung 6 zumindest zum Teil über die dritte Leitung 7 zu der ersten Entnahmevorrichtung 4. Wenn andersrum an der zweiten Entnahmevorrichtung 6 Heizmaterial gefördert wird, erfolgt der Rückstrom des Fluids über die erste Leitung 3 zu der ersten Entnahmevorrichtung 4 und dann zumindest zum Teil über die dritte Leitung 7 zu der zweiten Entnahmevorrichtung 6. Der Rückstrom des Fluids erfolgt deshalb zumindest zum Teil über die dritte Leitung 7, weil ein Teil des rückströmenden Fluids auch an der durchströmten Entnahmevorrichtung 4,6 in den Stoffspeicher entweichen kann, da die durchströmte Entnahmevorrichtung 4,6 nicht zwangsweise gegenüber dem Stoffspeicher geschlossen sein muss, wodurch die Entnahmevorrichtungen 4,6 in vorteilhafter Weise einfach ausgebildet sein können.

Die dritte Leitung 7 kann - in Betriebsanordnung - in der ersten Entnahmevorrichtung 4 beispielsweise seitlich, unter, ober oder diagonal neben der ersten Leitung 3 angeordnet sein. Dies gilt sinngemäß auch für die anderen Entnahmevorrichtungen.

Dabei hat es sich als besonders vorteilhaft erwiesen, dass in der ersten Entnahmevorrichtung 4 die dritte Leitung 7 - in Betriebsanordnung - über der ersten Leitung 3 angeordnet ist, und dass in der zweiten Entnahmevorrichtung 6 die dritte Leitung 7 - in Betriebsanordnung - über der zweiten Leitung 5 angeordnet ist. Dadurch kann eine besonders effiziente Auflockerung des Heizmaterials bei der Entnahmevorrichtung 4,6 an welcher gefördert wird erreicht werden.

In diesem Zusammenhang kann insbesondere vorgesehen sein, dass wenigstens einer der Einlässe der dritten Leitung 7 überdacht ist, also einen Abweiser 25 aufweist, welche - in Betriebsanordnung - das Heizmaterial von einem Eindringen in die dritte Leitung 7 abhalten. Weiters kann der Abweiser 25 den Strom des Fluids derart ablenken, dass eine besonders gute Auflockerung des Heizmaterials stattfindet.

Weiters kann bevorzugt vorgesehen sein, dass in der dritten Leitung 7 wenigstens ein Gitter angeordnet ist. Dadurch kann ein Transport von Heizmaterial von der ersten Entnahmevorrichtung 4 zu der zweiten Entnahmevorrichtung 6, oder der zweiten Entnahmevorrichtung 6 zu der ersten Entnahmevorrichtung 4 unterbunden werden. Dadurch können zwei Stoffspeicher mit unterschiedlichen Heizmaterialien verwendet werden, wobei in dem einen Stoffspeicher die erste Entnahmevorrichtung 4 und in dem anderen Stoffspeicher die zweite Entnahmevorrichtung 6 angeordnet ist, ohne das es zu einem Transport der Heizmaterialien zwischen den Stoffspeichern kommt.

Insbesondere kann vorgesehen sein, dass das wenigstens eine Gitter an wenigstens einem Einlass der dritten Leitung 7 angeordnet ist. Das Gitter kann auch vor dem wenigstens einem Einlass der dritten Leitung 7 in wenigstens einer Entnahmevorrichtung 4,6 angeordnet sein. Dadurch kann ein Eindringen von Heizmaterial in die dritte Leitung 7 unterbunden werden, wodurch ein verstopfen der dritten Leitung 7 unterbunden wird.

Weiters kann bevorzugt vorgesehen sein, dass das wenigstens eine Gitter über eine Öffnung, insbesondere einen Schlitz, aus der dritten Leitung 7 entfernbar ist. Weiters kann bevorzugt vorgesehen sein, dass das Gitter durch die Öffnung wieder in der dritten Leitung anordenbar ist. Eine Wartung des Gitters, insbesondere eine Reinigung des Gitters, kann auf diese Weise besonders schnell, zuverlässig und einfach erfolgen. Weiters kann das Gitter auch schnell durch ein anderes Gitter ersetzt werden, wodurch die Zeitdauer der Wartung besonders gering gehalten werden kann.

Besonders bevorzugt kann vorgesehen sein, dass die erste Entnahmevorrichtung 4 einen steuerbaren ersten Entnahmeverschluss aufweist, und dass die zweite Entnahmevorrichtung 6 einen steuerbaren zweiten Entnahmeverschluss aufweist. Die Entnahmeverschlüsse sind dabei derart ausgebildet, dass das Fluid bei der jeweiligen Entnahmevorrichtung 4,6, welche lediglich durchspült werden, direkt in die dritte Leitung 7 weitergeleitet wird, also nicht in den Stoffspeicher entweicht. Dadurch kann an der Entnahmestelle 4,6, an welcher das Heizgut gefördert wird, eine bessere Auflockerung des Heizmaterials durch einen mit großem Druck austretendem Fluid aus der dritten Leitung 7 erreicht werden. Bevorzugt ist in diesem Zusammenhang vorgesehen, dass der erste und der zweite Entnahmeverschluss gegengleich geöffnet sind, also die Entnahmestelle 4,6, an welcher gefördert wird, gegenüber dem Stoffspeicher offen ist, während die lediglich durchspülte Entnahmestelle 4,6 gegenüber dem Stoffspeicher geschlossen ist.

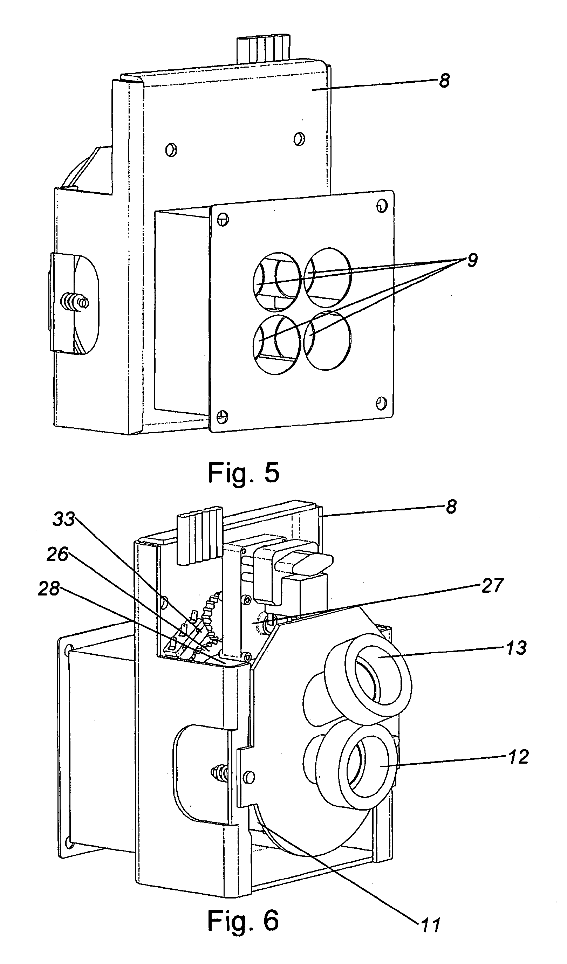

Bei einer Saugförderanlage 1 für eine Heizanlage, zur Entnahme festem, rieselfähigem Heizmaterials aus einem Stoffspeicher, wobei die Saugförderanlage 1 die Saugvorrichtung 2 aufweist, welche mittels der ersten Leitung 3 mit der ersten Entnahmevorrichtung 4 verbunden ist, und wobei die Saugvorrichtung 2 mittels der zweiten Leitung 5 mit der zweiten Entnahmevorrichtung 6 verbunden ist, kann besonders bevorzugt vorgesehen sein, dass zwischen der Saugvorrichtung 2 und der ersten und zweiten Leitung 3,5 eine Umschalteinheit 8, angeordnet ist, und dass die erste und zweite Leitung 3,5 an ortsfesten Anschlüssen 9 der Umschalteinheit 8 angeschlossen sind. Die Umschalteinheit 8 der bevorzugten Ausführungsform wird in Fig. 5 bis Fig.7 gesondert dargestellt. Die ortsfesten Anschlüsse 9 bedeuten in diesem Zusammenhang, dass die ortsfesten Anschlüsse 9 im Betrieb bei einem Umschaltvorgang der Umschalteinheit 8 lagefest sind, also nicht bewegt oder insbesondere verdreht werden. Dadurch kann auf eine einfache Weise bei der ersten und der zweiten Leitung 3,5 zwischen Förderleitung und Fluidzugangsleitung umgeschaltet werden, wobei eine mechanische Abnützung der Leitungen 3,5 durch ein Verwinden oder ein Verdrehen verhindert wird, und mechanisch stabilere und verschleißärmere Leitungen 3,5, insbesondere Metallrohre, verwendet werden können.

Besonders bevorzugt kann vorgesehen sein, dass die Umschalteinheit 8 mittels einer ersten und zweiten Ausgangsleitung 10, welche ortsfest an der Umschalteinheit 8 angeschlossen sind, mit der Saugvorrichtung 2 verbunden ist. Hierbei ist bevorzugt die erste Ausgangsleitung 10 fix mit der Saugseite 12 der Saugvorrichtung 2, und die zweite Ausgangsleitung 10 fix mit der Druckseite 13 der Saugvorrichtung 2 verbunden. Dadurch werden bei einem Umschaltvorgang der Umschalteinheit 8 keine Teile außerhalb der Umschalteinheit 8 bewegt, wodurch sich der mechanische Verschleiß, aber auch die Verletzungsgefahr durch sich bewegende Leitungen verringert.

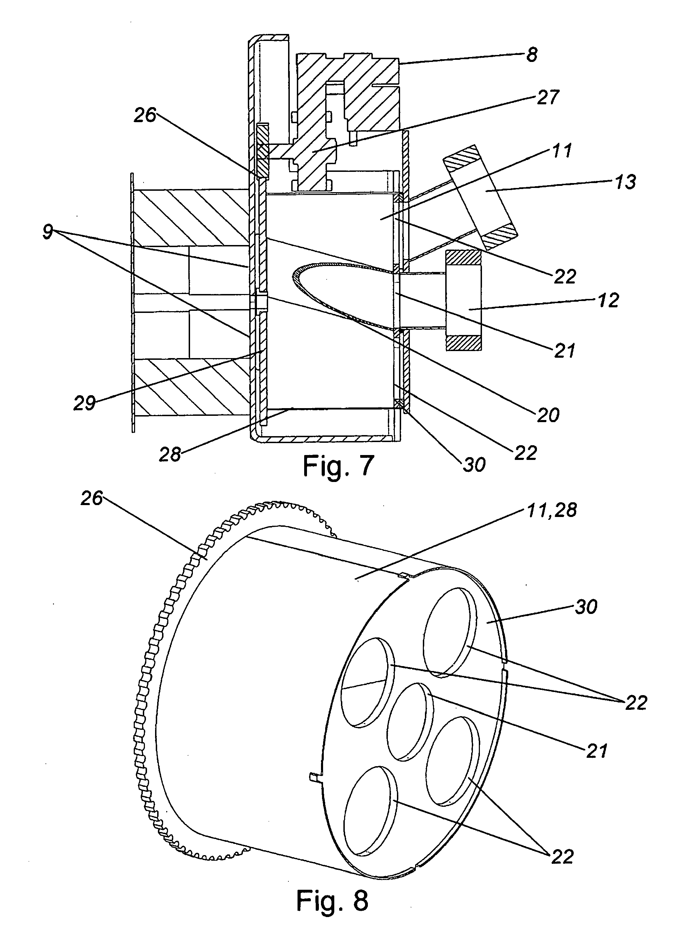

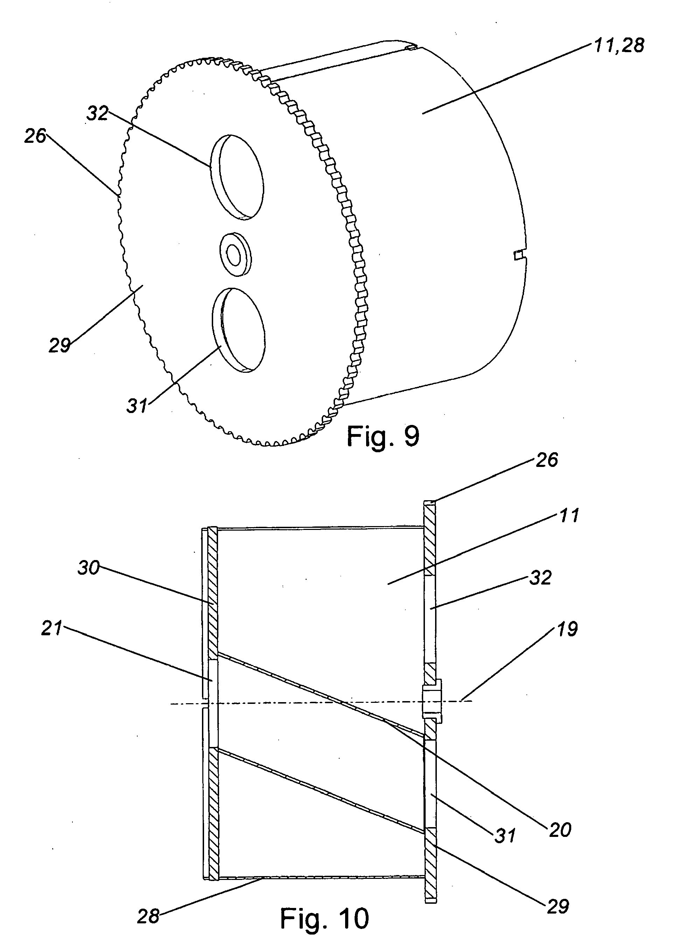

Gemäß Fig. 6 und Fig. 7 kann bevorzugt vorgesehen sein, dass die Umschalteinheit 8 eine drehbare Trommel 11 aufweist. Diese Trommel 11 der bevorzugten Ausführungsform wird in den Fig. 8 bis 10 gesondert dargestellt.

Die Trommel 11 umfasst bevorzugt einen Zahnkranz 26, in welchen ein Stellantrieb 27 der Umschalteinheit 8 eingreift. Alternativ kann Stellantrieb aber beispielsweise auch als Kettenantrieb, Direktantrieb oder manueller Antrieb ausgeführt sein. Die Lage der Trommel 11 kann bevorzugt durch, in den Zeichnungen nicht dargestellte, Nocken durch einen Positionsschalters 33 erfasst werden. Durch den Positionsschalter 33 kann die Trommel 11 in vorgebbare Stellungen positioniert werden. Vorteilhaft bei der Umschalteinheit 8 der dargestellten bevorzugten Ausführungsform ist weiters, dass durch die lagefesten ortsfesten Anschlüsse 9 und der lagefesten ersten und zweiten Ausgangsleitung 10 es ausreichend ist, die Trommel 11 nur in eine Drehrichtung zu bewegen, um alle vorgebbaren Stellungen zu erreichen, da es zu keiner Verdrehung außerhalb der Umschalteinheit 8 kommt. Dadurch kann der Stellantrieb 27 besonders einfach und zuverlässig ausgebildet und gesteuert werden, da dieser lediglich die Möglichkeit der Drehung in eine Richtung aufweisen muss, und keine Drehrichtungsumkehr erforderlich ist.

Besonders bevorzugt kann vorgesehen sein, dass in einer ersten Stellung der Trommel 11 die erste Leitung 3 mit der Saugseite 12 der Saugvorrichtung 2 und die zweite Leitung 5 mit der Druckseite 13 der Saugvorrichtung 2 verbunden ist, und dass in einer zweiten Stellung der Trommel 11 die zweite Leitung 5 mit einer Saugseite 12 der Saugvorrichtung 2 und die erste Leitung 3 mit einer Druckseite 13 der Saugvorrichtung 2 verbunden ist. Dadurch kann zuverlässig zwischen der ersten Leitung 3 und der zweiten Leitung 5 als Förderleitung oder Fluidzugangsleitung gewechselt werden.

Weiters kann vorgesehen sein, dass die Saugvorrichtung 2 mittels einer vierten Leitung 14 mit einer dritten Entnahmevorrichtung 15 und mittels einer fünften Leitung 16 mit einer vierten Entnahmevorrichtung 17 verbunden ist, und dass die dritte Entnahmevorrichtung 15 mittels einer sechsten Leitung 18 mit der vierten Entnahmevorrichtung 17 verbunden ist. Die vierte und fünfte Leitung 14,16 können bevorzugt wie die erste und zweite Leitung 3,5 ausgebildet sein. Auch die dritte und vierte Entnahmevorrichtung 15,17 kann bevorzugt wie die erste und zweite Entnahmevorrichtung 4,6 ausgebildet sein.

Besonders bevorzugt kann vorgesehen sein, dass die erste Entnahmevorrichtung 4 benachbart zur zweiten Entnahmevorrichtung 6, und die dritte Entnahmevorrichtung 15 benachbart zur vierten Entnahmevorrichtung 17 angeordnet ist. Dadurch bilden die erste und zweite Entnahmevorrichtung 4,6, sowie die dritte und vierte Entnahmevorrichtung 15,17 jeweils ein Paar aus zwei Partnerentnahmevorrichtungen, wodurch das rückströmende Fluid aus der Partnerentnahmevorrichtung den Fördervorgang einer Entnahmevorrichtung 4,6,15,17 durch ein auflockern des Heizmaterials unterstützen kann. Dadurch kann der Stoffspeicher besonders gleichmäßig entleert werden. Hierbei können bevorzugt die dritte und vierte Entnahmevorrichtung 15,17 im dem selben Stoffspeicher der ersten und zweiten Entnahmevorrichtung 4,6 angeordnet sein.

Insbesondere kann vorgesehen sein, dass zwischen der Saugvorrichtung 2 und der vierten und fünften Leitung 14,16 die Umschalteinheit 8 angeordnet ist, und dass die vierte und fünfte Leitung 14,16 an ortsfesten Anschlüssen 9 der Umschalteinheit 8 angeschlossen sind.

Weiters kann bevorzugt vorgesehen sein, dass in einer dritten Stellung der Trommel 11 die vierte Leitung 14 mit einer Saugseite 12 der Saugvorrichtung 2 und die fünfte Leitung 16 mit einer Druckseite 13 der Saugvorrichtung 2 verbunden ist, und dass in einer vierten Stellung der Trommel 11 die fünfte Leitung 16 mit einer Saugseite 12 der Saugvorrichtung 2 und die vierte Leitung 14 mit einer Druckseite 13 der Saugvorrichtung 2 verbunden ist. Dadurch kann mit einer Umschalteinrichtung an vier verschiedenen Entnahmevorrichtungen 4,6,15,17 mit einer Saugvorrichtung 2 Heizmaterial gefördert werden.

Die Umschalteinheit 8 kann derart ausgebildet sein, dass mehr Entnahmevorrichtungen als die vier verschiedenen dargestellten Entnahmevorrichtungen 4,6,15,17 mit der Saugvorrichtung 2 verbindbar sind. Beispielsweise kann die Umschalteinheit 8 auch derart ausgebildet sein, dass 6, 8, 10 oder eine andere gerade Anzahl von Entnahmevorrichtungen mit der Saugvorrichtung 2 verbindbar sind, wobei jeweils zwei Partnerentnahmevorrichtungen gleichzeitig mit der Saugvorrichtung 2 verbindbar sind.

Besonders bevorzugt kann vorgesehen sein, dass die Trommel 11 als, insbesondere zylinderförmiger, Hohlkörper ausgebildet ist, welcher von einem, gegenüber einer Drehachse 19 der Trommel 11, verwinkelt angeordneten Förderrohr 20 durchdrungen ist. Das Förderrohr 20 ist hierbei Teil der Förderleitung. Vorteilhaft daran ist, dass das Förderrohr 20 im Wesentlichen gerade ausgebildet werden kann, wodurch das angesaugte Heizmaterial mit geringem Widerstand die Umschalteinheit 8 passieren kann. Weiters sammelt sich dadurch kein Heizmaterial in der Umschalteinheit 8 an, welche zu einer Verdreckung oder Blockade der Saugförderanlage 1 führen könnte. Das Förderrohr 20 ist hierbei gegenüber dem restlichen Raum der Trommel 11 abgeschlossen, womit eine Durchmischung zwischen angesaugtem und rückfließendem Fluid unterbunden wird.

Der Hohlkörper der Trommel 11 kann insbesondere neben einer Mantelfläche 28, noch eine erste Stirnfläche 29 und eine zweite Stirnfläche 30 umfassen. Die erste Stirnfläche 29 kann insbesondere den ortsfesten Anschlüssen 9 zugewandt, und die zweite Stirnfläche 30 der ersten und zweiten Ausgangsleitung 10 zugewandt sein.

Insbesondere kann vorgesehen sein, dass das Förderrohr 20 ausgangsseitig in einer - bezüglich der Drehachse 19 - zentral angeordneten Ausgangsöffnung 21 mündet. An diese zentral angeordnete Ausgangsöffnung 21 kann dann die Saugseite 12 der Saugvorrichtung 2 angeschlossen sein. Die zentral angeordnete Ausgangsöffnung 21 ist daher bevorzugt eine Öffnung der zweiten Stirnfläche 30. Dadurch ergibt sich weiters ein besonders direkter Pfad für das angesaugte Fluid mit dem Heizmaterial.

Weiters kann bevorzugt vorgesehen sein, dass an der zweiten Stirnfläche 30 Fluidzugangsöffnungen 22 um die zentral angeordnete Ausgangsöffnung 21 angeordnet sind, wobei die Anzahl der Fluidzugangsöffnungen 22 der Anzahl der vorgesehenen vorgebbaren Stellungen der Trommel 11 entspricht. Bei einer Trommel mit vier Stellungen kann daher insbesondere vorgesehen sein, dass die zentral angeordnete Ausgangsöffnung 21 von vier Fluidzugangsöffnungen 22 umrandet ist.

An der ersten Stirnfläche 29 kann bevorzugt eine zur Drehachse 19 dezentral angeordnete Eingangsöffnung 31 des Förderrohres 20, sowie eine zur Drehachse 19 dezentral angeordnete Fluidausgangsöffnung 32 angeordnet sein. Die Eingangsöffnung 31 des Förderrohres 20 sowie die Fluidausgangsöffnung 32 sind dabei derart an der ersten Stirnfläche 29 angeordnet, dass in jeder Stellung der Trommel 11 die Eingangsöffnung 31 des Förderrohres 20 sowie die Fluidausgangsöffnung 32 gegenüber zwei der ortsfesten Anschlüsse 9 angeordnet sind, wobei insbesondere an diesen zwei ortsfesten Anschlüssen 9 zusammenhängende Partnerentnahmevorrichtungen angeschlossen sind. Bei einer vorgegebenen Stellung der Trommel 11 kann demnach das Fluid mit dem Heizmaterial aus einer, einem der ortsfesten Anschlüsse 9 zugeordneten, Entnahmevorrichtung 4,6,15,17 durch das Förderrohr 20 zur Saugseite 12 der Saugvorrichtung 2 befördert werden, während das rückströmende Fluid von der Druckseite 13 der Saugvorrichtung 2 in die Trommel 11 durch eine der Fluidzugangsöffnungen 22 eintritt und durch die Fluidausgangsöffnung 32 zu einer, einem anderem ortsfestem Anschluss 9, zugeordneten Entnahmevorrichtung 4,6,15,17 weitergeleitet wird.

Besonders bevorzugt kann vorgesehen sein, dass die Eingangsöffnung 31 und die Fluidausgangsöffnung 32 an der ersten Stirnfläche 29 bezüglich der Drehachse 19 gegenüberliegend angeordnet sind, und dass die ortsfesten Anschlüsse 9 von zwei zusammenhängende Partnerentnahmevorrichtungen ebenfalls bezüglich der Drehachse 19 gegenüberliegend angeschlossen sind. Dadurch kann durch eine Drehung der Trommel 11 um 180° bei zwei zusammenhängenden Partnerentnahmevorrichtungen die Verbindung mit Saugseite 12 und Druckseite 13 wahlweise gewechselt werden, insbesondere auch für eine Vielzahl an angeschlossenen Partnerentnahmevorrichtungen.

Um eine Vielzahl an Entnahmevorrichtungen 4,6,15,17 mit der Saugvorrichtung 2 zu verbinden kann bevorzugt eine Umschalteinheit 8 mit einer entsprechenden Anzahl an ortsfesten Anschlüssen 9 vorgesehen sein.

Es kann auch vorgesehen sein, mehrere Umschalteinheiten 8 parallel zueinander anzuordnen, welche jeweils auf separate Entnahmevorrichtungen 4,6,15,17 zugreifen, und welche ausgangseitig an die ortsfesten Anschlüsse 9 einer weiteren Umschalteinheit 8 angeschlossen sind. Die Verbindung dieser Umschalteinheit 8 untereinander kann bevorzugt mittels Verbindungsleitungen 34 erfolgen. Diese Anordnung kann dabei sowohl in die Breite, daher die Anzahl parallel nebeneinander angeordneter Umschalteinheiten 8, als auch in die Tiefe, daher die Anzahl hintereinander geschalteter Umschalteinheiten 8, erweitert werden. Auf diese Weise kann in der Art einer Kaskadenschaltung die vorstehend beschriebene Anordnung beliebig erweitert werden und derart an unterschiedliche Anforderungen angepasst werden. Bei einer derartigen Anordnung ist bevorzugt vorgesehen, dass derart viele Umschalteinheiten 8 hintereinander geschaltet sind, dass an einem Punkt wiederum lediglich eine einzige Umschalteinheit 8 angeordnet ist.

Dabei kann in Weiterführung der vorstehend beschriebenen Anordnung vorgesehen sein, die derart erzielte Bündelung wieder aufzusplitten, indem nachfolgend eine weitere Umschalteinheit 8 vorgesehen ist, welche in Flussrichtung umgekehrt in die Anordnung integriert ist, wodurch es möglich ist das Heizmaterial einer Vielzahl von Stoffspeichern zu entnehmen, und an mehrere Saugvorrichtungen 2 zu verteilen.

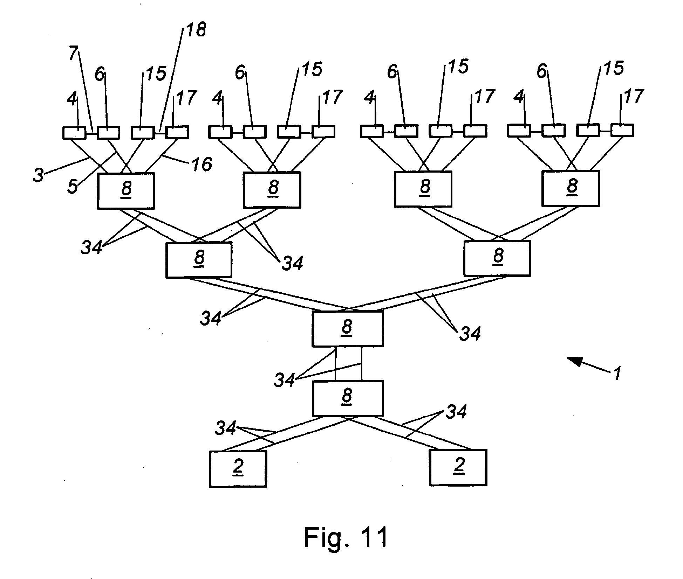

In Fig. 11 ist eine weitere bevorzugte Ausführungsform der Saugförderanlage 1 dargestellt, welche eine derartige Kaskadenschaltung aufweist. Die weitere bevorzugte Ausführungsform der Saugförderanlage 1 umfasst 2 Saugvorrichtungen 2 und 16 Entnahmevorrichtungen 4,6,15,17, welche mittels 8 Umschalteinheiten 8 derart mittelbar verbunden sind, dass eine der Saugvorrichtungen 2 von einer der 16 Entnahmevorrichtungen 4,6,15,17 Heizmaterial fördern kann. Zum Zwecke der klareren Darstellung scheinen nicht alle Bezugszeichen auf.

Stoffspeicher weisen in der Regel einen schrägen oder V-förmigen Boden auf, um besonders gut entleert werden zu können. Besonders bevorzugt kann vorgesehen sein, dass wenigstens eine der Entnahmevorrichtungen 4,6,15,17 eine Entnahmeöffnung 23 aufweist, welche unmittelbar in einer Schrägwand des Stoffspeichers angeordnet sind. Durch die Anordnung der Entnahmeöffnung 23 in der Schrägwand, und nicht am tiefsten Punkt des Bodens des Stoffspeichers, kann der Stoffspeicher besonders gut entleert werden, da es zu einer geringeren Verkeilung des Heizmaterials über der Entnahmeöffnung 23 kommt.

## Patentansprüche

1. Saugförderanlage (1) für eine Heizanlage, zur Entnahme festem, rieselfähigem Heizmaterials aus einem Stoffspeicher, wobei die Saugförderanlage (1) eine Saugvorrichtung (2) aufweist, welche mittels einer ersten Leitung (3) mit einer ersten Entnahmevorrichtung (4) verbunden ist, wobei die Saugvorrichtung (2) mittels einer zweiten Leitung (5) mit einer zweiten Entnahmevorrichtung (6) verbunden ist, **dadurch gekennzeichnet, dass** die erste Entnahmevorrichtung (4) mittels einer dritten Leitung (7) mit der zweiten Entnahmevorrichtung (6) verbunden ist.

2. Saugförderanlage (1) nach Anspruch 1, **dadurch gekennzeichnet, dass** die erste Leitung (3) als Förderleitung und die zweite Leitung (5) als Fluidzugangsleitung ausgebildet ist, oder dass die zweite Leitung (5) als Förderleitung und die erste Leitung (3) als Fluidzugangsleitung ausgebildet ist.

3. Saugförderanlage (1) nach Anspruch 1 oder 2, **dadurch gekennzeichnet, dass** in der ersten Entnahmevorrichtung (4) die dritte Leitung (7) - in Betriebsanordnung - über der ersten Leitung (3) angeordnet ist, und dass insbesondere in der zweiten Entnahmevorrichtung (6) die dritte Leitung (7) - in Betriebsanordnung - über der zweiten Leitung (5) angeordnet ist

4. Saugförderanlage (1) nach einem der Ansprüche 1 bis 3, **dadurch gekennzeichnet, dass** in der dritten Leitung (7) wenigstens ein Gitter angeordnet ist, und dass insbesondere das wenigstens eine Gitter an wenigstens einem Einlass der dritten Leitung (7) angeordnet ist.

5. Saugförderanlage (1) nach Anspruch 4, **dadurch gekennzeichnet, dass** das wenigstens eine Gitter über eine Öffnung, insbesondere einen Schlitz, aus der dritten Leitung (7) entfernbar ist.

6. Saugförderanlage (1) nach einem der Ansprüche 1 bis 5, **dadurch gekennzeichnet, dass** die erste Entnahmevorrichtung (4) einen steuerbaren ersten Entnahmeverschluss aufweist, und dass die zweite Entnahmevorrichtung (6) einen steuerbaren zweiten Entnahmeverschluss aufweist.

7. Saugförderanlage (1) nach einem der Ansprüche 1 bis 6, **dadurch gekennzeichnet, dass** zwischen der Saugvorrichtung (2) und der ersten und zweiten Leitung (3,5) eine Umschalteinheit (8) angeordnet ist, und dass die erste und zweite Leitung (3,5) an ortsfesten Anschlüssen (9) der Umschalteinheit (8) angeschlossen sind, und dass insbesondere die Umschalteinheit (8) mittels einer ersten und zweiten Ausgangsleitung (10), welche ortsfest der Umschalteinheit (8) angeschlossen sind, mit der Saugvorrichtung (2) verbunden ist.

8. Saugförderanlage (1) nach Anspruch 7, **dadurch gekennzeichnet, dass** die Umschalteinheit (8) eine drehbare Trommel (11) aufweist.

9. Saugförderanlage (1) nach Anspruch 8, **dadurch gekennzeichnet, dass** in einer ersten Stellung der Trommel (11) die erste Leitung (3) mit einer Saugseite (12) der Saugvorrichtung (2) und die zweite Leitung (5) mit einer Druckseite (13) der Saugvorrichtung (2) verbunden ist, und dass in einer zweiten Stellung der Trommel (11) die zweite Leitung (5) mit einer Saugseite (12) der Saugvorrichtung (2) und die erste Leitung (3) mit einer Druckseite (13) der Saugvorrichtung (2) verbunden ist.

10. Saugförderanlage (1) nach einem der Ansprüche 1 bis 9, **dadurch gekennzeichnet, dass** die Saugvorrichtung (2) mittels einer vierten Leitung (14) mit einer dritten Entnahmevorrichtung (15) und mittels einer fünften Leitung (16) mit einer vierten Entnahmevorrichtung (17) verbunden ist, und dass die dritte Entnahmevorrichtung (15) mittels einer sechsten Leitung (18) mit der vierten Entnahmevorrichtung (17) verbunden ist, dass insbesondere zwischen der Saugvorrichtung (2) und der vierten und fünften Leitung (14,16) die Umschalteinheit (8) angeordnet ist, und dass insbesondere die vierte und fünfte Leitung (14,16) an ortsfesten Anschlüssen (9) der Umschalteinheit (8) angeschlossen sind.

11. Saugförderanlage (1) nach Anspruch 10, **dadurch gekennzeichnet, dass** in einer dritten Stellung der Trommel (11) die vierte Leitung (14) mit einer Saugseite (12) der Saugvorrichtung (2) und die fünfte Leitung (16) mit einer Druckseite (13) der Saugvorrichtung (2) verbunden ist, und dass in einer vierten Stellung der Trommel (11) die fünfte Leitung (16) mit einer Saugseite (12) der Saugvorrichtung (2) und die vierte Leitung (14) mit einer Druckseite (13) der Saugvorrichtung (2) verbunden ist.

12. Saugförderanlage (1) nach einem der Ansprüche 7 bis 11, **dadurch gekennzeichnet, dass** mehrere Umschalteinheiten (8) parallel zueinander angeordnet sind, welche jeweils auf separate Entnahmevorrichtungen (4,6,15,17) zugreifen, und welche ausgangseitig an die ortsfesten Anschlüsse (9) einer weiteren Umschalteinheit (8) angeschlossen sind.

13. Saugförderanlage (1) nach einem der Ansprüche 8 bis 12, **dadurch gekennzeichnet, dass** die Trommel (11) als, insbesondere zylinderförmiger, Hohlkörper ausgebildet ist, welcher von einem, gegenüber einer Drehachse (19) der Trommel (11), verwinkelt angeordneten Förderrohr (20) durchdrungen ist, dass insbesondere Förderrohr (20) ausgangsseitig in einer - bezüglich der Drehachse (19) - zentral angeordneten Ausgangsöffnung (21) mündet, und dass insbesondere zentral angeordnete Ausgangsöffnung (21) von vier Fluidzugangsöffnungen (22) umrandet ist.

14. Saugförderanlage (1) nach einem der Ansprüche 1 bis 13, **dadurch gekennzeichnet, dass** wenigstens eine der Entnahmevorrichtungen (4,6,15,17) eine Entnahmeöffnung (23) aufweist, welche unmittelbar in einer Schrägwand des Stoffspeichers anordenbar ist.

15. Stoffspeicher mit einer Saugförderanlage (1) nach einem der Ansprüche 1 bis 14, **dadurch gekennzeichnet, dass** die zweite Entnahmevorrichtung (6) von der ersten Entnahmevorrichtung (4) beabstandet an dem selben Stoffspeicher angeordnet ist.

## Claims

1. A suction conveyor system (1) for a heating system, for removing solid, free-flowing heating material from a material store, wherein the suction conveyor system (1) has a suction device (2), which is connected by means of a first line (3) to a first removal device (4), wherein the suction device (2) is connected by means of a second line (5) to a second removal device (6), **characterized in that** the first removal device (4) is connected by means of a third line (7) to the second removal device (6).

2. The suction conveyor system (1) according to Claim 1, **characterized in that** the first line (3) is implemented as a conveyor line and the second line (5) is implemented as a fluid access line, or the second line (5) is implemented as a conveyor line and the first line (3) is implemented as a fluid access line.

3. The suction conveyor system (1) according to Claim I or 2, **characterized in that**, in the first removal device (4), the third line (7) - in operational arrangement - is arranged above the first line (3), and in particular in the second removal device (6), the third line (7) - in operational arrangement- is arranged above the second line (5).

4. The suction conveyor system (1) according to one of Claims I to 3, **characterized in that** at least one grating is arranged in the third line (7), and in particular the at least one grating is arranged at at least one inlet of the third line (7).

5. The suction conveyor system (1) according to Claim 4, **characterised in that** the at least one grating is removable from the third line (7) via an opening, in particular a slot.

6. The suction conveyor system (1) according to one of Claims I to 5, **characterized in that** the first removal device (4) has a controllable first removal closure, and the second removal device (6) has a controllable second removal closure.

7. The suction conveyor system (1) according to one of Claims 1 to 6, **characterized in that** a switchover unit (8) is arranged between the suction device (2) and the first and second lines (3, 5), and the first and second lines (3, 5) are attached to stationary connections (9) of the switchover unit (8), and in particular the switchover unit (8) is connected to the suction device (2) by means of a first and second outlet line (10), which are attached in a stationary manner to the switchover unit (8).

8. The suction conveyor system (1) according to Claim 7, **characterized in that** the switchover unit (8) has a rotatable drum (11),

9. The suction conveyor system (1) according to Claim 8, **characterized in that**, in a first position of the drum (11), the first line (3) is connected to a suction side (12) of the suction device (2) and the second line (5) is connected to a pressure side (13) of the suction device (2), and, in a second position of the drum (11), the second line (5) is connected to a suction side (12) of the suction device (2) and the first line (3) is connected to a pressure side (13) of the suction device (2).

10. The suction conveyor system (1) according to one of Claims I to 9, **characterized in that** the suction device (2) is connected by means of a fourth line (14) to a third removal device (15) and by means of a fifth line (16) to a fourth removal device (17), and the third removal device (15) is connected by means of a sixth line (18) to the fourth removal device (17), the switchover unit (8) is arranged in particular between the suction device (2) and the fourth and fifth lines (14, 16), and in particular the fourth and fifth lines (14, 16) are attached to stationary connections (9) of the switchover unit (8).

11. The suction conveyor system (1) according to Claim 10, **characterized in that**, in a third position of the drum (11), the fourth line (14) is connected to a suction side (12) of the suction device (2) and the fifth line (16) is connected to a pressure side (13) of the suction device (2), and in a fourth position of the drum (11), the fifth line (16) is connected to a suction side (12) of the suction device (2) and the fourth line (14) is connected to a pressure side (13) of the suction device (2).

12. The suction conveyor system (1) according to any one of Claims 7 to 11, **characterized in that** multiple switchover units (8) are arranged parallel to one another, which respectively access separate removal devices (4, 6, 15, 17), and which are attached on the outlet side to the stationary connections (9) of a furthcr switchover unit (8).

13. The suction conveyor system (1) according to one of Claims 8 to 12, **characterized in that** the drum (11) is implemented as a hollow body, in particular a cylindrical hollow body, which is penetrated by a conveyor pipe (20) arranged at an angle in relation to a rotational axis (19) of the drum (11), in particular the conveyor pipe (20) opens at an outlet side into an outlet opening (21), which is arranged centrally - in relation to the rotational axis (19) - and in particular the centrally arranged outlet opening (21) is bordered by four fluid access openings (22).

14. The suction conveyor system (1) according to one of Claims 1 to 13, **characterized in that** at least one of the removal devices (4, 6, 15, 17) has a removal opening (23), which can be arranged directly in an inclined wall of the material store.

15. A material store having a suction conveyor system (1) according to one of Claims 1 to 14, **characterized in that** the second removal device (6) is arranged spaced apart from the first removal device (4) on the same material store.

## Revendications

1. Installation de transport par aspiration (1) pour une installation de chauffage, pour le prélèvement de combustible de chauffage solide et fluide à partir d'un réservoir de combustible, laquelle installation de transport par aspiration (1) présente un dispositif d'aspiration (2) qui est relié au moyen d'une première conduite (3) avec un premier dispositif de prélèvement (4), le dispositif d'aspiration (2) étant relié au moyen d'une deuxième conduite (5) à un deuxième dispositif de prélèvement (6), **caractérisée en ce que** le premier dispositif de prélèvement (4) est relié au deuxième dispositif de prélèvement (6) au moyen d'une troisième conduite (7).

2. Installation de transport par aspiration (1) selon la revendication 1, **caractérisée en ce que** la première conduite (3) est conçue comme une conduite de transport et la deuxième conduite (5) comme une conduite d'accès de fluide, ou **en ce que** la deuxième conduite (5) est conçue comme une conduite de transport et la première conduite (3) comme une conduite d'accès de fluide.

3. Installation de transport par aspiration (1) selon la revendication 1 ou 2, **caractérisée en ce que** la troisième conduite (7) est disposée dans le premier dispositif de prélèvement (4) avant la première conduite (3), dans la configuration de fonctionnement, et **en ce qu'**en particulier, dans le deuxième dispositif de prélèvement (6), la troisième conduite (7) est disposée au-dessus de la deuxième conduite (5) dans la configuration de fonctionnement.

4. Installation de transport par aspiration (1) selon l'une des revendications 1 à 3, **caractérisée en ce qu'**au moins une grille est disposée dans la troisième conduite (7), et **en ce qu'**en particulier, l'au moins une grille est disposée sur au moins une entrée de la troisième conduite (7).

5. Installation de transport par aspiration (1) selon la revendication 4, **caractérisée en ce que** l'au moins une grille peut être enlevée de la troisième conduite (7) via une ouverture, en particulier une fente.

6. Installation de transport par aspiration (1) selon l'une des revendications 1 à 5, **caractérisée en ce que** le premier dispositif de prélèvement (4) présente une première fermeture de prélèvement pouvant être commandée, et **en ce que** le deuxième dispositif de prélèvement (6) présente une deuxième fermeture de prélèvement pouvant être commandée.

7. Installation de transport par aspiration (1) selon l'une des revendications 1 à 6, **caractérisée en ce qu'**une unité de commutation (8) est prévue entre le dispositif d'aspiration (2) et les première et deuxième conduites (3, 5) et **en ce que** les première et deuxième conduites (3, 5) sont raccordées à des raccords fixes (9) de l'unité de commutation (8), et **en ce que** l'unité de commutation (8) est en particulier reliée au dispositif d'aspiration (2) au moyen d'une première conduite de sortie et d'une deuxième (10), raccordées à demeure à l'unité de commutation (8).

8. Installation de transport par aspiration (1) selon la revendication 7, **caractérisée en ce que** l'unité de commutation (8) présente un tambour (11) rotatif.

9. Installation de transport par aspiration (1) selon la revendication 8, **caractérisée en ce que** dans une première position du tambour (11), la première conduite (3) est raccordée avec un côté d'aspiration (12) du dispositif d'aspiration (2) et la deuxième conduite (5) avec un côté de refoulement (13) du dispositif d'aspiration (2), et **en ce que** dans une deuxième position du tambour (11), la deuxième conduite (5) est raccordée avec un côté d'aspiration (12) du dispositif d'aspiration (2) et la première conduite (3) avec un côté de refoulement (13) du dispositif d'aspiration (2).

10. Installation de transport par aspiration (1) selon l'une des revendications 1 à 9, **caractérisée en ce que** le dispositif d'aspiration (2) est relié au moyen d'une quatrième conduite (14) à un troisième dispositif de prélèvement (15) et au moyen d'une cinquième conduite (16) avec un quatrième dispositif de prélèvement (17), et **en ce que** le troisième dispositif de prélèvement (15) est relié au moyen d'une sixième conduite (18) avec le quatrième dispositif de prélèvement (17), **en ce que** l'unité de commutation (8) est en particulier disposée entre le dispositif d'aspiration (2) et les quatrième et cinquième conduites (14, 16) et **en ce qu'**en particulier, les quatrième et cinquième conduites (14, 16) se raccordent à des raccords fixes (9) de l'unité de commutation (8).

11. Installation de transport par aspiration (1) selon la revendication 10, **caractérisée en ce que** dans une troisième position du tambour (11), la quatrième conduite (14) est reliée avec un côté d'aspiration (12) du dispositif d'aspiration (2) et la cinquième conduite (16) avec un côté de refoulement (13) du dispositif d'aspiration (2), et **en ce que** dans une quatrième position du tambour (11), la cinquième conduite (16) est reliée avec un côté d'aspiration (12) du dispositif d'aspiration (2) et la quatrième conduite (14) avec un côté de refoulement (13) du dispositif d'aspiration (2).

12. Installation de transport par aspiration (1) selon l'une des revendications 7 à 11, **caractérisée en ce que** sont disposées parallèlement les unes aux autres plusieurs unités de commutation (8), qui accèdent chacune à des dispositifs de prélèvement (4, 6, 15, 17) séparés et qui sont raccordées du côté de la sortie aux raccords fixes (9) d'une autre unité de commutation (8).

13. Installation de transport par aspiration (1) selon l'une des revendications 8 à 12, **caractérisée en ce que** le tambour (11) est conformé comme un corps creux, en particulier cylindrique, qui est traversé par un tuyau de transport (20) formant un angle par rapport à l'axe de rotation (19) du tambour (11), **en ce qu'**en particulier, le tuyau de transport (20) débouche du côté de la sortie dans une ouverture de sortie (21) disposée au centre par rapport à l'axe de rotation (19) et **en ce qu'**en particulier, l'ouverture de sortie (21) disposée au centre est bordée par quatre ouvertures d'accès de fluide (22).

14. Installation de transport par aspiration (1) selon l'une des revendications 1 à 13, **caractérisée en ce que** l'un au moins des dispositifs de prélèvement (4, 6, 15, 17) présente une ouverture de prélèvement (23) qui peut être disposée directement dans une paroi oblique du réservoir de combustible.

15. Réservoir de combustible muni d'une installation de transport par aspiration (1) selon l'une des revendications 1 à 14, **caractérisé en ce que** le deuxième dispositif de prélèvement (6) est disposé à distance du premier dispositif de prélèvement (4) sur le même réservoir de combustible.
